# EUROPÄISCHE PATENTSCHRIFT

(11) **EP 0 671 492 B1**
(45) Veröffentlichungstag und Bekanntmachung des Hinweises auf die Patenterteilung: **29.09.1999**
(21) Anmeldenummer: 95105349.5
(22) Anmeldetag: 17.03.1993
(51) Int. Cl.: D01F 2/00, D01D 5/06, D01D 5/088, C08J 5/18

(54) **Verwendung einer Spinndüse zur Herstellung cellulosischer Fäden**
Use of a spinneret for the manufacture of cellulose filaments
Utilisation d'une filière pour la fabrication de fils cellulosiques

(30) Priorität: 17.03.1992 AT 53792
(43) Veröffentlichungstag der Anmeldung: 13.09.1995
(62) Teilanmeldung aus: 93905085.2
(73) Patentinhaber: LENZING AKTIENGESELLSCHAFT, 4860 Lenzing (AT)
(72) Erfinder: Zikeli, Stefan, A-4844 Regau (AT); Rauch, Ernst, A-4861 Schörfling (AT); Koberger, Hermann, A-4871 Zipf (AT); Ecker, Friedrich, A-4850 Timelkam (AT); Rüf, Hartmut, A-4840 Vöcklabruck (AT); Jurkovic, Raimund, A-4860 Lenzing (AT); Schwenninger, Franz, A-4860 Lenzing (AT)
(74) Vertreter: Schwarz, Albin, Dr.

(56) Entgegenhaltungen:
- EP-A- 0 105 169
- EP-A- 0 494 852
- GB-A- 807 248
- GB-A- 957 534
- US-A- 4 261 943
- DATABASE WPI Section Ch, Week 8522, Derwent Publications Ltd., London, GB; Class A, AN 85-128668 & DD-A-218 121 (VEB CHEMIEFASER W PIECK) 30. Januar 1985
- PATENT ABSTRACTS OF JAPAN vol. 10, no. 310 (C-379) 22. Oktober 1986 & JP-A-61 119 704 (MITSUI PETROCHEM IND LTD) 6. Juni 1986

## Beschreibung

Die Erfindung betrifft die Verwendung einer Spinndüse zur Herstellung cellulosischer Formkörper indem eine Lösung von Cellulose in einem tertiären Aminoxid in warmem Zustand geformt und die geformte Lösung in ein Fällbad eingebracht wird, um die enthaltene Cellulose zu fällen.

Aus der US-PS 2,179,181 ist bekannt, daß tertiäre Aminoxide Cellulose zu lösen vermögen und daß aus diesen Lösungen durch Fällung cellulosische Formkörper gewonnen werden können. Ein Verfahren zur Herstellung derartiger Lösungen ist beispielsweise aus der EP-A - 0 356 419 bekannt. Gemäß dieser Veröffentlichung wird zunächst eine Suspension von Cellulose in einem wässerigen tertiären Aminoxid bereitet. Das Aminoxid enthält bis zu 40 Masse-% Wasser. Die wässerige Cellulose-Suspension wird erhitzt und unter Druckverminderung wird so lange Wasser abgezogen, bis die Cellulose in Lösung geht. Das Verfahren wird in einer eigens entwickelten, evakuierbaren Rühreinrichtung durchgeführt.

Ein Verfahren der eingangs beschriebenen Art ist aus der DE-A - 28 44 163 und der DD-A - 218 121 bekannt. Zur Herstellung von Cellulosefasern oder Cellulosefolien wird zwischen Spinndüse und Fällbad eine Luftstrecke bzw. Luftspalt gelegt, um einen Düsenverzug zu erreichen. Dieser Düsenverzug ist notwendig, da nach Kontakt der geformten Spinnlösung mit dem wässerigen Fällbad eine Reckung der Fäden sehr erschwert wird. Im Fällbad wird die im Luftspalt eingestellte Faserstruktur fixiert.

Im Luftspalt besteht jedoch die Gefahr, daß die noch nicht koagulierten Einzelfäden aufgrund ihrer extrem hohen Klebrigkeit aneinander haften bzw. miteinander verschmelzen und somit ein Faserspinnen unmöglich machen. Die Verklebungsgefahr ist naturgemäß umso größer, je länger die Strecke zwischen Düsenplatte und Fällbadoberfläche ist (Luftstrecke). Eine lange Strecke wäre aber andererseits vorteilhaft, da für die Orientierung der Cellulosemoleküle eine gewisse Zeit erforderlich ist. Um aber bei langer Luftstrecke die Verklebungsgefahr zu minimieren, muß die Lochdichte der Spinndüse verringert werden, was sich wiederum nachteilig auf die Wirtschaftlichkeit des Spinnverfahrens auswirkt.

Eine kurze Spinnstrecke hingegen erlaubt zwar ein Spinnen mit hoher Lochdichte, verschlechtert aber andererseits die Spinnsicherheit, da durch die Kapillarwirkung der Filamente Fällbadflüssigkeit an die Austrittsseite der Spinnbohrungen bzw. Spinnlöcher gelangt. Dazu kommt noch, daß die geformte, aber noch flüssige Fadenmasse dem Fadenverzug nicht standhält, d.h., daß die gewünschte Fadenstärke nicht erreicht wird. Gleichzeitig konnte festgestellt werden, daß sich infolge verkürzter Aufenthaltszeit im Luftspalt die textilen Faserdaten hinsichtlich Festigkeit und Dehnung kaum beeinflussen lassen.

Aus der DD-A - 218 121 ist vorbeschrieben, daß sich eine Verkürzung der Strecke des Düsenverzugs und damit eine Abnahme der Gefahr des Verklebens der Einzelfäden ohne Einfluß auf die Spinnsicherheit oder Fadenfestigkeit durch Zugabe eines Polyalkylenethers, insbesondere von Polyethylenglykol, zur Spinnlösung erreichen läßt. Auch in der DE-A - 28 44 163 wird auf die extreme Klebrigkeit des gesponnen Fäden hingewiesen und zu deren Beseitigung u.a. das Besprühen der Fäden im Luftspalt mit einer gegenüber Cellulose nichtlösenden Flüssigkeit vorgeschlagen.

Versuche haben gezeigt, daß alle Lösungsvorschläge nicht befriedigend sind und zwar entweder hinsichtlich der erreichbaren Spinnfadendichten oder hinsichtlich der Beeinflussung der textilen Eigenschaften der Cellulosefasern.

Gemäß der DE-A - 28 44 163 beträgt der Abstand zwischen Spinndüse und Fällbadoberfläche zwar 270 mm, jedoch läßt sich eine Spinnfadendichte von offenbar nur etwa 0,0046 Fäden/mm² (entsprechend einer Spinnlochdichte der Spinndüse von 0,0046 Loch/mm²) erreichen. Mit einer derart geringen Lochdichte ist ein Spinnen im großtechnischen Maßstab nicht denkbar. Dazu müßten Spinndüsen mit einer Lochdichte von mehr als 0,1 Loch/mm² eingesetzt werden. Derartige Düsen sind beispielsweise in der österreichischen Patentanmeldung AT-A-272489 beschrieben.

Hier setzt nun die Erfindung an, welche sich somit die Aufgabe stellt, das eingangs erwähnte Verfahren derart zu verbessern, daß es gestattet, die Klebrigkeit der frisch extrudierten cellulosischen Formkörper zu vermindern, ohne der Spinnmasse irgendwelche Zusätze zuzugeben und ohne die Oberfläche der Formkörper mit einem Fällungsmittel zu besprühen. Die Erfindung stellt sich insbesondere die Aufgabe, ein Verfahren zur Herstellung cellulosischer Fäden bereitzustellen, wobei unter Verwendung einer Spinndüse mit hoher Lochdichte ein dichter Fadenverband gesponnen werden kann, welcher über eine große Luftstrecke dem Fällbad zugeführt wird, um die textilen Eigenschaften der gesponnen Fäden besser einstellen zu können. Trotz dichtem Fadenverband und trotz großer Luftstrecke soll es zu keinem Verkleben von einzelnen Fäden kommen.

Die erfindungsgemäße Verwendung ist die verwendung einer Spinndüse zur Herstellung cellulosischer Fäden aus einer Lösung von Cellulose in einem wässerigen tertiären Aminoxid, welche Spinndüse aufweist:
- Spinnlöcher, die im wesentlichen ringförmig angeordnet sind, und
- eine unmittelbar unterhalb der Spinnlöcher vorgesehene Zuführung Zur Kühlgas zur Kühlung der cellulosischen Fäden, wobei die Zuführung im Zentrum des durch die Anordnung der Spinnlöcher gebildeten Ringes vorgesehen ist.

Zur Herstellung cellulosischer Fäden durch Formung der cellulosischen Lösung mittels einer Spinndüse hat sich besonders bewährt, wenn die Spinnrichtung im wesentlichen im rechten Winkel zum Gasstrom steht. Es hat sich überraschenderweise gezeigt, daß das oben beschriebene Problem des Verklebens auf einfache Weise dadurch beseitigt werden kann, indem die frisch gesponnenen Fäden z.B. einem Luftstrom ausgesetzt werden. Bereits ein einfaches Anblasen des Fadenverbandes mit einem Ventilator bewirkt, daß mit Spinndüsen mit einer Lochdichte bis zu 0,7 Loch/mm² gearbeitet und die Luftstrecke bis zu 70 mm lang gewählt werden kann, ohne daß es im Luftspalt zu einer Verklebung einzelner Fäden kommt.

Bei Verwendung von Spinndüsen mit noch höherer Lochdichte reicht das über einen Ventilator aufzubringende Strömungsprofil nicht mehr aus, um im gesamten Fadenverband eine gleichmäßige Abkühlung zu gewährleisten. Eine bevorzugte Ausgestaltung des erfindungsgemäßen Verfahrens besteht in diesem Fall darin, die warme, geformte Lösung mindestens zwei Gasströmen auszusetzen, wobei die geformte Lösung am besten an gegenüberliegenden Seiten von den Gasströmen getroffen wird.

Eine Ausführungsform der erfindungsgemäßen Verwendung einer Spinndüse zur Herstellung cellulosischer Fäden, besteht darin, daß die warme cellulosische Lösung durch eine Spinndüse mit einer Vielzahl von Spinnlöchern geführt wird, welche im wesentlichen ringförmig angeordnet sind, wobei die als gesponnene Fäden vorliegende warme, geformte Lösung den beiden Gasströmen derart ausgesetzt wird, daß ein Gasstrom radial nach außen und der andere radial nach innen gerichtet ist. Auf diese Weise ist es möglich, den Kühleffekt derart zu verstärken, daß Fadenverbände mit einer Dichte bis zu 1,4 Faden/mm² über eine Strecke von mindestens 50 mm geführt werden können, ohne daß einzelne Fasern miteinander verkleben.

Zur Kühlung wird der warmen, geformten Lösung insbesondere eine Wärmemenge von mindestens 20 kJ/kg Lösung, vorzugsweise zwischen 20 und 350 kJ/kg Lösung, entzogen.

Zum gleichmäßigen Abkühlen von sehr dichten Fadenverbänden, welche aus einer Spinndüse mit einer Lochdichte von mehr als 0,7 Loch/mm² extrudiert werden, hat es sich als vorteilhaft erwiesen, wenn noch zusätzlich ein weiterer Kühlgasstrom auf den Fadenverband gerichtet ist, welcher von außen zugeführt wird. Diese Ausgestaltung der erfindungsgemäßen Vorrichtung weist somit noch eine weitere Zuführung für Kühlgas auf, welche außerhalb der ringförmigen Spinnplatte angeordnet ist. In diesem Fall wird der ringförmige Fadenverband sowohl an seiner Innenseite, als auch an seiner Außenseite dem Kühlgas ausgesetzt. Es hat sich gezeigt, daß mit dieser Maßnahme der Kühleffekt wesentlich verstärkt wird.

In der Zuführung für Kühlgas im Zentrum der ringförmigen Spinnplatte können Strömungs- oder Verdrängungskörper zur Strömungsvergleichmäßigung des Kühlgases vorgesehen sein.

Eine weitere Ausgestaltung der erfindungsgemäßen Verwendung besteht darin, daß die Spinnlöcher der Spinndüse gruppenförmig zusammengefaßt sind.

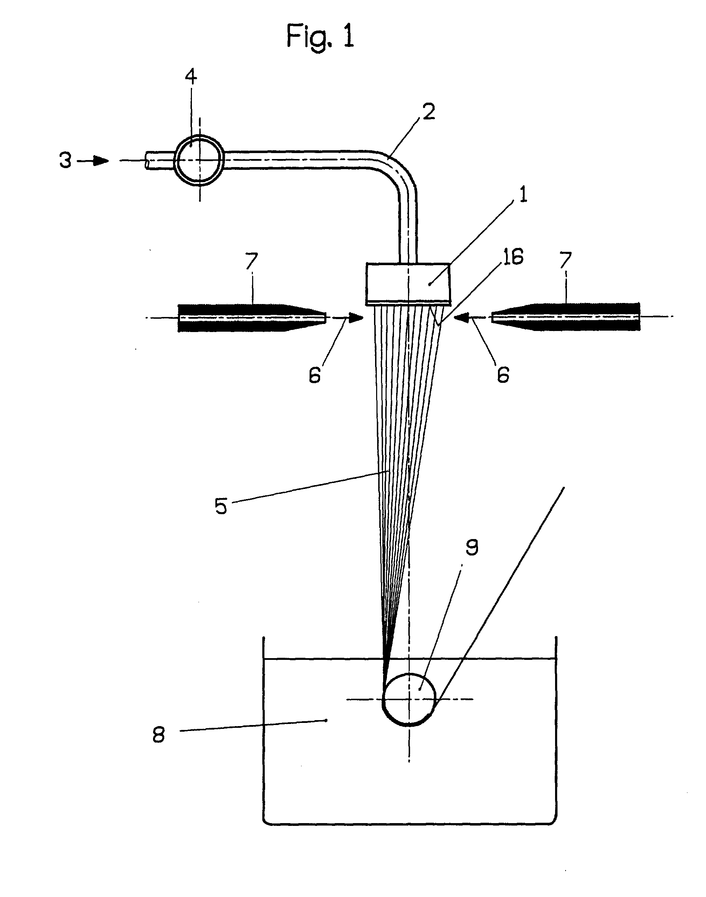

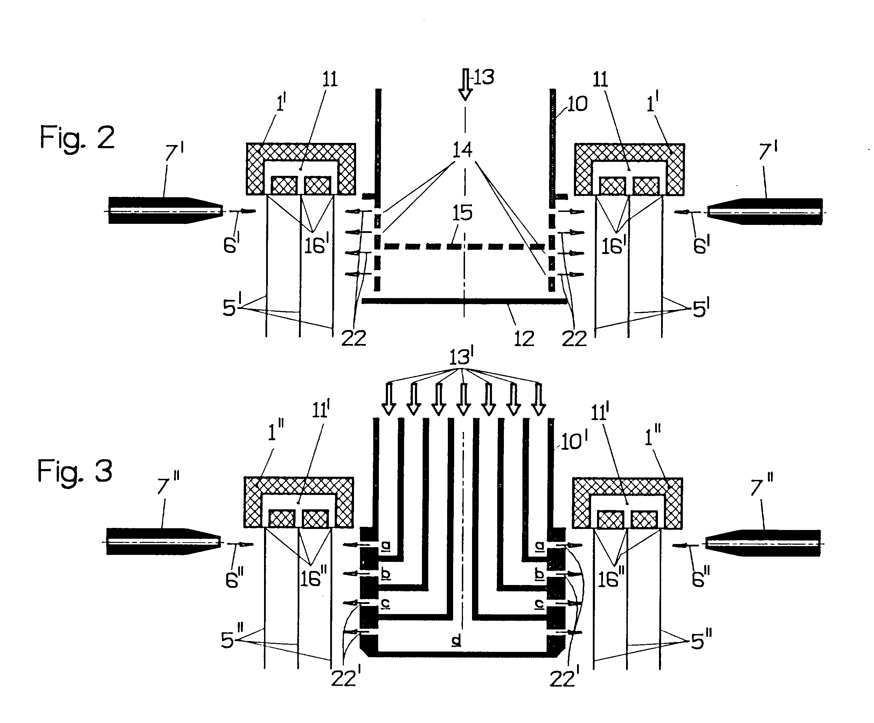

Die erfindungsgemäße Verwendung wird an Hand der Zeichnung beispielshaft noch näher erläutert, wobei die Figur 1 schematisch eine bevorzugte Ausgestaltung der erfindungsgemäßen Verwendung einer Spinndüse zur Herstellung cellulosischer Fäden und die Figuren 2, 3 und 4 bevorzugte Ausgestaltungen der entsprechenden Spinnvorrichtung zeigen.

In Figur 1 ist mit 1 eine beheizbare (Beheizung nicht dargestellt) Spinndüse bezeichnet, welche über die Zuleitung 2 mit Spinnmasse 3, d.h. warmer Celluloselösung mit einer Temperatur von etwa 100 °C, beschickt wird. Die Pumpe 4 dient zum Dosieren der Spinnmasse und zum Einstellen des für das Extrudieren erforderlichen Druckes. Der aus der Spinndüse 1 über die Spinnlöcher 16 extrudierte Fadenverband 5 wird mit einem inerten Gas 6, vorzugsweise Luft, gekühlt, welche über die Gasdüsen 7 auf den die Spinndüse 1 verlassenden Fadenverband 5 gerichtet ist. Durch dieses Anblasen kann mit Spinndüsen gearbeitet werden, welche eine hohe Lochdichte aufweisen, ohne daß es zu einem Verkleben der Spinnfäden während des Spinnvorganges kommt.

Der Fadenverband 5 gelangt über eine Luftstrecke, welche durch den Abstand der Spinndüse 1 von der Oberfläche des Fällbades 8 definiert ist, in das Fällbad 8, wird über eine Ablenkrolle 9 zusammengefaßt und abgezogen. Das erfindungsgemäße Anblasen bzw. Kühlen des Fadenverbandes ermöglicht das Einstellen einer relativ langen Luftstrecke, sodaß beim Verzug der Fäden ausreichend Zeit zur Orientierung der Cellulosemoleküle zur Verfügung steht. Der Verzug wird erreicht, indem der Fadenverband 5 mit größerer Geschwindigkeit über die Rolle 9 abgezogen wird, als er die Spinndüse 1 verläßt.

Die Gasdüsen 7 umgeben kranzförmig den Fadenverband 5 und können entweder direkt an der Spinndüse 1 angebracht, oder eine eigene konstruktive Einheit bilden, welche wiederum mit der Spinndüse 1 verbunden ist. Naturgemäß sollte ein Wärmeübergang von der warmen Spinnmasse 3 in der Spinndüse 1 zum Kühlgas 6 möglichst unterbunden werden, was durch eine entsprechende Isolierung auf einfache Weise erreicht werden kann. Für den erfindungsgemäßen Effekt ist lediglich entscheidend, daß der Strahl des Kühlgases auf den die Spinndüse 1 unmittelbar verlassenden Fadenverband 5 gerichtet ist und zwar am besten in einer Ebene, die im wesentlichen parallel zu jener Ebene ist, welche durch die Spinnlöcher 16 gebildet wird.

Weitere Ausgestaltungen der in Figur 1 dargestellten Spinnvorrichtung bestehend aus Spinndüse und Kühlgasdüsen sind in den Figuren 2, 3 und 4 schematisch gezeigt. Mit Hilfe dieser Ausgestaltungen können noch dichtere Fadenverbände verarbeitet werden, d.h. es können Spinndüsen mit noch höherer Lochdichte eingesetzt werden.

Die Figuren 2 und 3 zeigen im Schnitt eine ringförmige, beheizbare (Beheizung nicht dargestellt) Spinndüse 1', 1'' und eine Anblasvorrichtung bestehend aus Gasdüsen 7', 7'' und einer zentralen Zuführung 10, 10' für Kühlgas 13, 13'. Die ringförmige Spinndüse 1', 1'' wird an einer in der Zeichnung nicht dargestellten Stelle mit Spinnmasse 11, 11' gespeist und zu einem dichten, ringförmigen Fadenverband 5', 5'' versponnen, welcher von innen und von außen mit Kühlgas beblasen wird. Die Beblasungsrichtung ist in den beiden Figuren mittels ausgezogener Pfeile 22, 22' bzw 6', 6'' angedeutet.

Die in den beiden Figuren dargestellten Ausgestaltungen der Vorrichtung unterscheiden sich in der zentralen Zuführung 10, 10' für Kühlgas 13, 13'. Zuführung 10 ist als einfaches Rohr mit einer Prallplatte 12 und Durchlässen 14 ausgebildet. Zuführung 10 kann beispielsweise mittels eines in Figur 2 nicht dargestellten Ventilators mit Kühlgas 13 gespeist werden. Der Gasstrom 13 trifft auf die Prallplatte 12, wird horizontal umgelenkt, tritt aus den Durchlässen 14 als Gasstrom 22 aus und trifft den ringförmigen Fadenverband 5' an seiner Innenseite. In der Zuführung 10 kann ein Körper 15 zur Vergleichmäßigung der Gasströmung vorgesehen sein. Durch die Beblasung des Fadenverbandes 5' radial von außen und von innen wird der Kühleffekt wesentlich verstärkt.

Die in Figur 3 dargestellte zentrale Zuführung 10' besitzt mehrere Einzelkammern a-d, welche mit Kühlgas 13' gespeist werden. Durch diesen segmentartigen Aufbau der Zuführung 10' kann der Fadenverband mit unterschiedlichen Kühlmedien bzw. unter unterschiedlichen Bedingungen beblasen werden. Außerdem ist es mit der Ausgestaltung gemäß Figur 3 möglich, den Fadenverband über eine längere Distanz dem Kühlgas auszusetzen und so die Cellulosefäden in ihren textilen Daten noch besser zu beeinflussen.

Die Gasdüsen 7', 7'' umgeben kranzförmig den ringförmigen Fadenverband 5', 5'' und können entweder direkt an der Spinndüse 1', 1'' angebracht, oder eine eigene konstruktive Einheit bilden, welche wiederum mit der Spinndüse 1', 1'' verbunden ist. Hinsichtlich der konstruktiven Gestaltung gilt das bei Figur 1 Ausgeführte. Das gilt auch für die Zuführung 10, 10'.

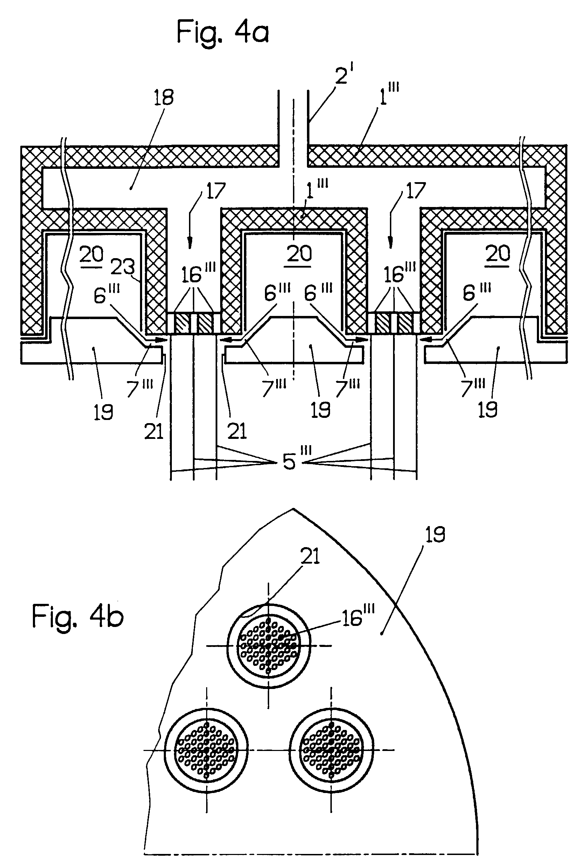

Es ist auch möglich, die Luftdüsen zur Beblasung der Fäden in die Spinndüse zu integrieren, wobei aber naturgemäß der Wärmeisolation besondere Beachtung zu schenken ist. Eine derartige Ausführungsform ist in Figur 4 dargestellt, wobei Fig. 4a eine Vorrichtung mit zylindrischem Spinndüsengehäuse (beheizbar; Beheizung nicht dargestellt) im Schnitt zeigt und Fig. 4b einen Ausschnitt der Unteransicht dieser Ausführungsform.

Figur 4a zeigt in schematischer Darstellung eine Spinndüse 1"', wobei die Spinnlöcher 16"' am Kopf von zylinderförmigen Kanälen 17 vorgesehen sind. Die Zuführung der Spinnmasse 18 in die Spinndüse 1''' ist als 2' dargestellt. Während des Spinnvorganges wird die Spinnmasse in die Kanäle 17 gedrückt und durch die Spinnlöcher 16"' extrudiert. Die Spinndüse 1''' ist kapillarenseitig von einer kreisförmigen Platte 19 abgedeckt, welche kreisförmige Ausnehmungen 21 besitzt, die derart gestaltet und auf der Platte 19 positioniert sind, daß die extrudierten Fäden 5''' ungehindert austreten und abgezogen werden können. Durch die Abdeckung der Spinndüse 1''' entsteht ein Hohlraum 20, in welchen Kühlgas geleitet wird (nicht dargestellt). Die Platte 19 ist so gestaltet und auf der Spinndüse 1''' so angebracht, daß sie mit dem Kopf der Kanäle 17 nicht schließt, sondern ringförmige Spalte 7''' bildet, durch die Kühlgas austreten und den extrudierten Fadenverband 5''' horizontal anströmen kann (in Figur 4a durch Pfeile 6''' im Spalt 7''' dargestellt). Der ringförmige Spalt 7''' erfüllt somit die Funktion der kranzförmig angebrachten Gasdüsen 7, 7', 7'' in den Ausgestaltungen gemäß den Fig. 1, 2 bzw. 3. Durch diese spezielle Konstruktion wird somit um jeden Fadenverband 5''' ein Ring aus Kühlgas geschaffen, welcher eine effiziente Kühlung eines dichten Fadenverbandes 5''' gestattet. Fig. 4b zeigt in Unteransicht der Spinndüse 1''' einen Ausschnitt der Platte 19, die Ausnehmungen 21, aus denen Kühlgas strömt und die Spinnlöcher 16"'.

Um einen Wärmeübergang von der Spinnmasse 18 zum Kühlgas im Raum 20 zu verhindern, ist der Raum 20 spinndüsenseitig mit einer Isolierung 23 ausgekleidet.

Mit den nachfoldenden Ausführungsbeispielen wird die Erfindung noch näher beschrieben.

### Beispiele 1-5

Eine gemäß dem in der EP-A - 0 356 419 beschriebenen Verfahren hergestellte Cellulose-Lösung wurde filtriert und in warmem Zustand gemäß dem in Figur 1 dargestellten Verfahren versponnen, wobei in den Beispielen 1-4 als Spinnvorrichtung die in Figur 2 und in Beispiel 5 die in Figur 4 schematisch dargestellte Ausführungsform verwendet wurde.

In der Tabelle sind für alle 5 Beispiele die pro Stunde versponnene Masse an Celluloselösung (kg/h), ihre Zusammensetzung (Masse-%), ihre Temperatur (° C) beim Verspinnen, die Lochdichte (Anzahl der Löcher/mm²) der Spinndüse, der Durchmesser der Spinnlöcher (µ), die Zufuhr der inneren Kühlluft (m³/h), ihre Temperatur (° C), die Temperatur (° C) der abgeführten inneren Kühlluft, die Zufuhr der äußeren Kühlluft (m³/h), ihre Temperatur (° C), die pro kg versponnener Celluloselösung abgeführte Wärmemenge (kJ/kg), die Länge der Luftstrecke (mm), der Faserverzug, der NMMO-Gehalt des Fällbades (Masse-% NMMO) und der Endtiter der hergestellten Fasern (dtex) angegeben.

**Tabelle**

| Beispiel | 1 | 2 | 3 | 4 | 5 |
|---|---|---|---|---|---|
| Spinnmassedurchsatz | 45,6 | 24,67 | 7,84 | 9,10 | 18,80 |
| Cellulose | 11,86 | 11,83 | 12,86 | 12,21 | 11,00 |
| NMMO | 78,25 | 77,57 | 75,35 | 76,68 | 77,22 |
| Wasser | 9,89 | 10,60 | 12,65 | 11,11 | 11,78 |
| Temperatur | 112 | 112 | 110 | 113 | 90 |
| Lochdichte | 0,68 | 0,60 | 0,18 | 1,14 | 0,27 |
| Lochdurchmesser | 100 | 100 | 100 | 100 | 130 |
| Kühlung innen (Menge) | 100 | 170 | 70 | 200 | 50 |
| Temp.d.Kühlluft | -6 | -5 | 5 | 4,9 | 24 |
| Temp.d.abgeführten Kühlluft | 32 | 32,8 | 34,2 | 30,1 | 31 |
| Kühlung außen (Menge) | 23 | 27 | 12 | 17 | - |
| Temp.d.Kühlluft | 24 | 24 | 24 | 17,3 | - |
| abgeführte Wärme | 32,37 | 103,46 | 152,90 | 338,24 | 28,72 |
| Luftstrecke | 70 | 60 | 140 | 65 | 85 |
| Faserverzug | 10,6:1 | 8,03:1 | 4,34:1 | 13,49:1 | 13,02:1 |
| Fällbad | 20 | 20,9 | 20,8 | 29,2 | 23,8 |
| Endtiter | 1,3 | 1,3 | 3,13 | 1,7 | 1,36 |

Ein Verkleben von Einzelfäden wurde in keinem der Beispiele beobachtet.

## Patentansprüche

1. Verwendung einer Spinndüse zur Herstellung cellulosischer Fäden aus einer Lösung von Cellulose in einem wässerigen tertiären Aminoxid, welche Spinndüse aufweist:
- Spinnlöcher, die im wesentlichen ringförmig angeordnet sind, und
- eine unmittelbar unterhalb der Spinnlöcher vorgesehene Zuführung für Kühlgas zur Kühlung der cellulosischen Fäden, wobei die Zuführung im Zentrum des durch die Anordnung der Spinnlöcher gebildeten Ringes vorgesehen ist.

## Claims

1. The use of a spinneret for the production of cellulosic threads of a solution of cellulose in an aqueous tertiary amine oxide, which spinneret comprises:
- spinning holes arranged in a substantially annular manner and
- a cooling gas feed provided immediately below the spinning holes for cooling the cellulosic threads, said cooling gas feed being provided in the center of the ring constituted by the arrangement of the spinning holes.

## Revendications

1. Utilisation d'une filière pour la préparation de fils cellulosiques à partir d'une solution de cellulose dans un aminoxyde tertiaire aqueux, laquelle filière présente :
- des trous de filage, qui sont agencés sensiblement de manière annulaire, et
- une amenée de gaz de refroidissement, prévue immédiatement en dessous des trous de filage, pour le refroidissement des fils cellulosiques, l'amenée étant prévue au centre de l'anneau formé par l'agencement des trous de filage.
